Europäisches Patentamt

European Patent Office

Office européen des brevets

(11) Publication number: **0 273 653 B1**

## EUROPEAN PATENT SPECIFICATION

(45) Date of publication of patent specification: **26.06.91**  (51) Int. Cl.⁵: **F02B 55/06, F01M 1/06**

(21) Application number: **87311153.8**

(22) Date of filing: **17.12.87**

(54) Rotary engine.

(30) Priority: **20.12.86 GB 8630503**

(43) Date of publication of application:
**06.07.88 Bulletin 88/27**

(45) Publication of the grant of the patent:
**26.06.91 Bulletin 91/26**

(84) Designated Contracting States:
**DE FR GB IT**

(56) References cited:
**FR-A- 994 396**
**GB-A- 1 383 079**
**US-A- 3 528 398**
**US-A- 4 351 162**

(73) Proprietor: **Norton Motors Limited**
**Lynn Lane Shenstone**
**Lichfield, Staffs WS14 0EA(GB)**

(72) Inventor: **Garside, David Walker**
**43 Old Station Road Hampton-in-Arden**
**Solihull West Midlands(GB)**

(74) Representative: **Leach, John Nigel et al**
**FORRESTER & BOEHMERT Widenmayer-**
**strasse 4/I**
**W-8000 München 22(DE)**

## Description

This invention relates to a rotary internal combustion engine of the kind, hereinafter referred to as the kind specified, in which a rotary piston or rotor, rotates within a cavity in a housing, the rotor and the walls of the cavity being so shaped that working chambers are formed therebetween which vary in volume as the rotor rotates and the cavity being provided with inlet and exhaust ports and the rotor providing passage means for cooling air. Such an engine is described in GB-A-2100795 and GB-A-1383079.

However, in such known engines the passage means in the rotor forms an induction passage to the working chambers so that the induced air is passed therethrough and thereby cools the rotor.

More particularly, but not exclusively, the invention relates to a so-called Wankel engine in which the housing has a two-lobed epitrochoidal bore which forms the cavity and has end plates which form axially spaced end walls closing the cavity, the rotor has an outer profile of generally equilateral triangular shape with outwardly curved sides such as convexly curved sides, and is mounted on an eccentric journal of a main shaft and is geared to rotate in a planetary manner within the cavity at one third of the speed of rotation of the main shaft.

An object of the invention is to provide a new and improved rotary engine of the kind specified.

According to one aspect of the invention we provide a rotary engine of the kind specified wherein means are provided to force air through the passage means to cool the rotor as a result of motion of the engine through the surrounding atmosphere and to exhaust to atmosphere the air which has passed through the passage means and means are provided to supply the engine with air to be inducted into the working chambers from the atmosphere without being ducted from the passage means in the rotor.

Entry duct means may be provided to duct air to the passage means in the rotor from a desired position. For example, from a position of maximum air pressure created by said movement.

Exit duct means may be provided to duct air discharged from the passage means to a desired position. For example, a position of minimum air pressure created by said movement.

Means may be provided to supply a lubricant to the air that passes through the passage means.

The lubricant may be added at or adjacent to the position at which it enters the rotor to lubricate bearings and rubbing surfaces.

The exit duct means may be provided with means to collect said lubricant from the air discharged from the passage means.

Means may be provided to return the thus collected lubricant to the engine for re-use.

The rotor may be mounted on an eccentric journal of a main shaft and be geared to rotate in a planetary manner within the cavity and the eccentric being provided with further passage means for passage therethrough of said air which passes through said passage means in the rotor.

The cooling air which flows through said passage means and further passage means when present, may be caused to flow therethrough solely as a result of said movement of the engine through the surrounding atmosphere.

Alternatively, the cooling air which flows through said passage means and further passage means when present, may be caused to flow therethrough partly as a result of movement of the engine through the surrounding atmosphere and partly by an air flow generating means driven from a power source.

The cavity may have end plates which form axially spaced end walls closing the cavity and between which rotates the rotor, the end plates being provided with openings with which said passage means in the rotor communicate intermittently.

The rotor may be provided with means to reduce the extent of cooling required, for example, by providing thermal insulation on the flank of the rotor exposed to combustion.

The engine may be installed in a vehicle such as an aircraft. Preferably in a vehicle which is capable of travelling at a speed of at least 100mph and preferably which is capable of travelling at a speed of at least 150mph.

The present invention avoids the need to provide a fan or exhaust ejector or other means for creating flow of air through the rotor. In addition, an increased power output is achieved compared with an engine in which the air which is caused to flow through the rotor is then used as the air which is inducted into the working chambers of the engine since in such an engine power-loss occurs due to the engine charge being heated and the pressure reduced.

The engine may be a so called Wankel engine having the features described hereinbefore.

According to a second aspect of the invention we provide a method of operating a rotary engine according to the first aspect of the invention when installed in a vehicle comprising the steps of moving the vehicle through the surrounding atmosphere at such a speed that air from the atmosphere is caused to flow through the passage means to cool the rotor as a result of a ram effect created by said movement of the vehicle.

The invention will now be described in more detail by way of example with reference to the accompanying drawings wherein

FIGURE 1 is a composite longitudinal cross sectional view through a rotary engine embodying the engine in which the top half is a section taken on the minor axis of the engine and the bottom half is a section taken on the major axis of the engine;

FIGURE 2 is a transverse cross-section, to a reduced scale, through the engine shown in Figure 1;

FIGURE 3 is a section to a reduced scale, through an end plate taken on the minor axis of the engine shown in Figures 1 and 2;

FIGURE 4 is a diagrammatic plan view showing the engine of Figures 1 to 3 installed in an aircraft;and

FIGURE 5 is a diagrammatic side elevation of the aircraft shown in Figure 4.

Referring first to the drawings, there is illustrated a rotary engine E, which is of the so called Wankel type and comprises a stationary housing 10, having inlet and outlet ports 8, 9 respectively, a two-lobed epitrochoidal bore 11 therethrough and end plates 12a, 12b to close the bore at the ends thereof.

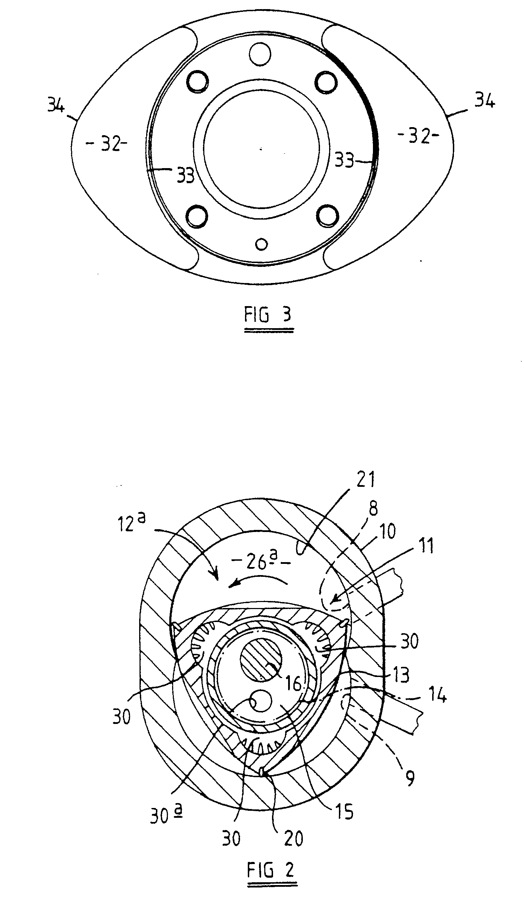

A rotor 13 of generally equilateral triangular shape having outwardly curved sides is rotatably mounted by a needle bearing 14 upon an eccentric journal 15 of a main shaft 16 which is rotatably mounted in bearings 17 mounted in the end plates 12a, 12b and has balance weights 18 and 19 secured to its opposite extremities. Sealing strips 20 carried at the apices of the rotor 13 maintain sealing contact with the peripheral wall 21 of the epitrochoidal bore 11 as the rotor 13 rotates in a planetary manner within the bore 11 (anti-clockwise in Figure 2). The rotor 13 has an internally toothed indexing gear 22 which meshes with an externally toothed fixed gear 23 carried by the end plate 12a, and the gear 22 controls the planetary motion of the rotor 13, the teeth ratios being such that the rotor 13 rotates once for every three revolutions of the main shaft 16.

Face seals 25 are provided between the end faces 26a, 26b of the cavity and the adjacent faces of the rotor 13.

The rotor 13 is provided with an axially entending passageway 30 adjacent each apex of the rotor 13; the three passageways 30 together constitute a passage means for cooling air as hereinafter to be described.

Entry and exit openings 31, 32 are provided in the end plates 12b, 12a respectively of diametrically opposed locations and of a shape shown in Figure 3. The shape of the openings 31 are the same as those 32 shown in Figure 3. The openings 31, 32 are made of the maximum area possible to facilitate maximum possible cooling of the rotor. The limit of the diameter of the inner edge 33 of each opening is imposed by the space required for the accommodation of the bearings 17 and in particular the ball bearing 17 provided at the inlet side of the rotor. The shape of the outer edge 34 is limit by the locus of the inner edge of the side face seals 25.

As the rotor 13 rotates each passage 30 therein alternately communicates with one or other opening of each pair of openings 31, 32.

In the present example the eccentric 15 is also provided with a passage 30a through which cooling air also passes after entry through the openings 31 for discharge through the openings 32. This may be omitted if not required.

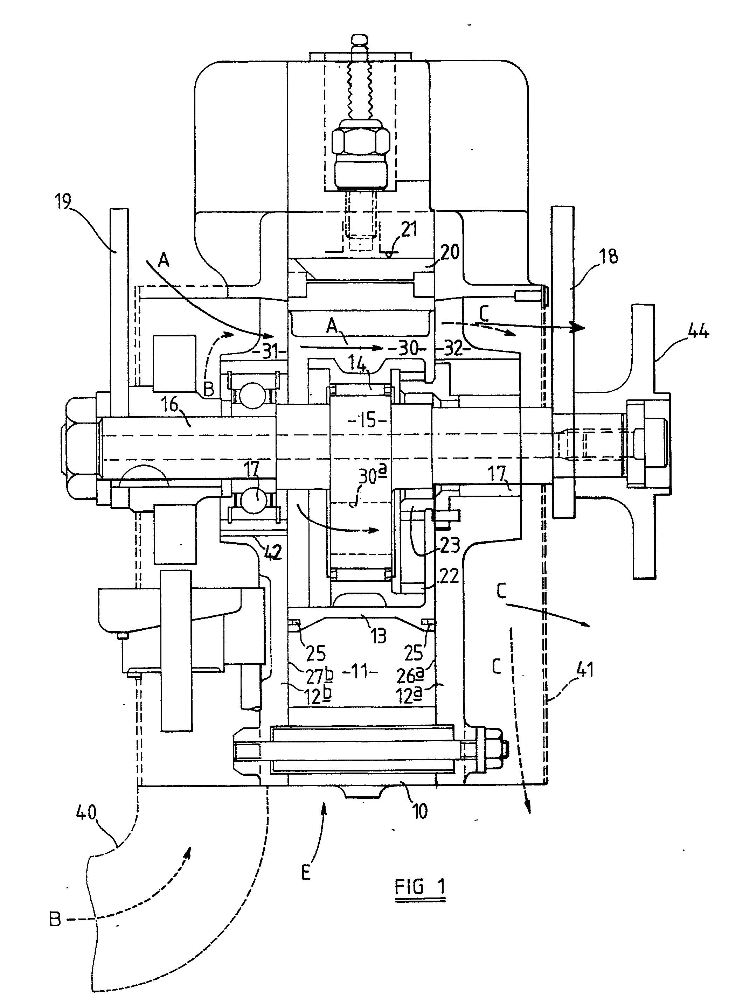

Air is fed to the inlet openings 31 either directly from the atmosphere as shown by the arrow A as in this example or via a suitable inlet duct as indicated in dotted line at 40 in Figure 1 the flow of air being illustrated by the dotted arrows B.

After flowing through the openings 31 passages 30 and exit openings 32 the air is discharged to atmosphere, as indicated by the arrows C.

The engine is mounted in a vehicle such as an aircraft, for example, a target drone in such a position that the movement of the vehicle through the atmosphere pressurises the inlet air sufficiently for it to be forced through the openings 31 passageways 30 and exit openings 32 and then discharged to a low pressure atmospheric region either directly or at the exit end of an exit duct 41 shown in the dotted lines in Figure 1. Depending upon the application and the disposition of the engine in the vehicle and the speed of movement of the vehicle sufficient air pressure may be generated for the air to be fed directly to the inlet opening 31 as shown by the arrow A or duct means 40 may be provided to duct the air to the inlet opening 31 from a region of high pressure created as a result of movement of the vehicle through the atmosphere. If desired, but not shown, the exit duct means 41 may be extended to connect the exit openings 32 to a suitable region of low pressure to ensure that adequate flow of cooling air through the rotor is achieved.

Air for induction into the working chambers of the engine is inducted in conventional manner to a suitable carburettor or fuel injection system directly from atmosphere at a suitable position and the inducted air has not been ducted from the rotor passage and so has not passed though the rotor to cool it.

An oil feed means 42 is provided to feed oil or other lubricant into the region between the surface 27b and adjacent end surface of the rotor to lubricate the rubbing surfaces and beaings. Some of this lubricant enters the cooling air flowing through the passages 30, 30a and suitable collecting means are provided to collect the lubricant from the air before it is discharged to atmosphere. For example, the exhaust duct may be provided with means to collect lubricant which comes out of suspension in the air and, if desired, baffles may be provided to increase the recovery of the lubricant.

Recycling means may be provided to return the thus connected lubricant to the engine for re-use.

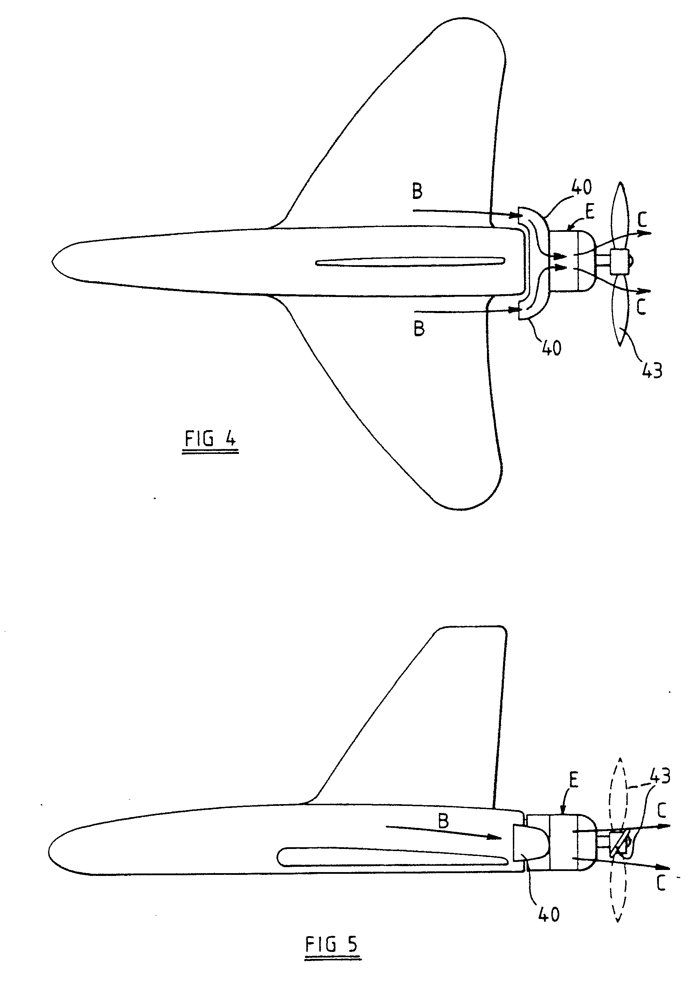

In the present example the engine is installed in a target drone aircraft, as shown in Figures 4 and 5 in a "pusher" configuration, which is normally operated at a speed of at least 150mph but the invention may be applied to vehicles which will operate at lower speeds although in general the speed of movement of the vehicle through the atmosphere should be at least 100mph. In this case a propeller 43 at the rear of the aircraft is connected to the main shaft 16 by a propeller flange 44 and the inlet ducts 40 are configured as shown in Figure 4 and 5, whilst the air is discharged directly into the propeller intake which is a region of low pressure.

The invention may be applied to vehicles which operate at slower speeds by providing a fan or other air flow creating means to augment the effect of the movement of the vehicle to cause flow of cooling air through the rotor. In this case the fan or other air flow creating means would be driven from a power source, for example, by a power take off from the engine itself or by an electric motor running on electric current generated by the engine itself. Alternatively a separate power source for this purpose may be provided if desired.

If desired the rotor may be provided with means to reduce the amount of cooling required by the rotor for example by providing thermal insulation on the flank of the rotor which is exposed to combustion.

## Claims

1. A rotary engine (E) in which a rotary piston or rotor (13) rotates within a cavity (11) in a housing (10), the rotor (13) and the walls (21) of the cavity (11) being so shaped that working chambers are formed therebetween which vary in volume as the rotor (13) rotates and the cavity (11) being provided with inlet (8) and exhaust (9) ports and the rotor providing passage means (30) for cooling air, characterised in that means (40, 41) are provided to force air through the passage means (30) to cool the rotor (13) as a result of motion of the engine (E) through the surrounding atmosphere and to exhaust to atmosphere the air which has passed through the passage means and means are provided to supply the engine (E) with air to be inducted into the working chambers from the atmosphere without being ducted from the passage means (30) in the rotor (13).

2. An engine according to Claim 1 wherein entry duct means (40) are provided to duct air to the passage means (30)in the rotor (13) from a position of maximum air pressure created by said motion.

3. An engine according to Claim 1 or Claim 2 wherein exit duct means (41) are provided to discharge the air which has passed through said passage means (30) to the atmosphere at a position of minimum air pressure created by said motion.

4. An engine according to any one of Claims 1 to 3 wherein means (42) are provided to supply a lubricant to the air that passes through the passage means (30).

5. An engine according to Claim 4 wherein the exit duct means (41) are provided with means to collect said lubricant from the air discharged from the passage means (30) and to return the thus collected lubricant to the engine (E) for re-use.

6. An engine according to any one of the preceding claims wherein the rotor (13) is mounted on an eccentric journal (15) of a main shaft (16) and is geared to rotate in a planetary manner within the cavity (11), the eccentric (15) being provided with further passage means (30a) for passage therethrough of said air which passes through said passage means (30) in the rotor (13), the cavity (11) being provided with end plates (12a, 12b) which form axially spaced end walls closing the cavity (11) and between which rotates the rotor (13), the end plates (12a, 12b) being provided with openings (31, 32) with which said passage means (30) in the rotor (13) communicate intermittently.

7. An engine according to any one of the preceeding claims wherein cooling air which flows through said passage means (30), and further passage means (30a) when present, is caused to flow therethrough solely as a result of said motion of the engine (E) through the surrounding atmosphere.

8. An engine according to any one of Claims 1 to 6 wherein the cooling air which flows through said passage means (30) and further passage means (30a) when present, is caused to flow therethrough partly as a result of motion of the engine (E) through the surrounding atmosphere and partly by an air flow generating means driven from a power source.

9. An engine according to any one of the preceeding claims wherein the rotor (13) is provided with means to reduce the extent of cooling required.

10. An engine according to Claim 9 wherein said means comprises thermal insulation on a flank of the rotor exposed to combustion.

11. An engine according to any one of the preceeding claims wherein the engine (E) is installed in a vehicle.

**Revendications**

1. Un moteur rotatif (E) dans lequel un piston rotatif ou rotor (13) tourne à l'intérieur d'une cavité (11) dans un carter (10), le rotor (13) et les parois (21) de la cavité (11) présentant une forme telle qu'il se forme entre eux des chambres de travail dont le volume varie lorsque le rotor (13) tourne et la cavité (11) étant munie d'orifices d'admission (8) et d'échappement (9) et le rotor comportant des moyens de passage (30) pour de l'air de refroidissement, caractérisé en ce que des moyens (40, 41) sont prévus pour obliger l'air traversant les moyens de passage (30) à refroidir le rotor (13) sous l'effet du déplacement du moteur (E) dans l'atmosphère qui l'entoure et à décharger dans l'atmosphère l'air qui a traversé les moyens de passage et en ce que des moyens sont prévus pour alimenter le moteur (E) en air à aspirer dans les chambres de travail à partir de l'atmosphère sans être guidé par les moyens de passage (30) dans le rotor (13).

2. Un moteur selon la revendication 1, dans lequel des moyens de canalisation d'entrée (40) sont prévus pour canaliser l'air vers les moyens de passage (30) dans le rotor (13) à partir d'un emplacement à pression d'air maximale créée par 2ledit déplacement.

3. Un moteur selon la revendication 1 ou 2, dans lequel des moyens de canalisation de sortie (41) sont prévus pour décharger l'air qui a traversé lesdits moyens de passage (30) vers l'atmosphère en un emplacement à pression d'air minimale créée par ledit déplacement.

4. Un moteur selon l'une quelconque des revendications 1 à 3, dans lequel des moyens (42) sont prévus pour fournir un lubrifiant à l'air qui traverse les moyens de passage (30).

5. Un moteur selon la revendication 4, dans lequel les moyens de canalisation de sortie (41) sont munis de moyens pour collecter ledit lubrifiant en provenance de l'air déchargé à partir des moyens de passage (30) et pour retourner le lubrifiant ainsi collecté au moteur (E) à des fins de réemploi.

6. Un moteur selon l'une quelconque des revendications précédentes, dans lequel le rotor (13) est monté sur un palier excentrique (15) d'un arbre principal (16) et est inclus dans une transmission synchrone pour tourner de façon planétaire à l'intérieur de la cavité (11), l'excentrique (15) étant muni d'autres moyens de passage (30a) pour permettre le passage traversant dudit air qui traverse lesdits moyens de passage (30) dans le rotor (13), la cavité (11) étant munie de plaques d'extrémité (12a, 12b) qui forment des parois d'extrémité axialement espacées fermant la cavité (11) et entre lesquelles tourne le rotor (13), les plaques d'extrémité (12a, 12b) étant munies d'ouvertures (31, 32) par lesquelles lesdits moyens de passage (30) dans le rotor (13) communiquent par intermittence.

7. Un moteur selon l'une quelconque des revendications précédentes, dans lequel l'air de refroidissement qui s'écoule à travers lesdits moyens de passage (30) et lesdits moyens de passage supplémentaires (30a) lorsqu'ils existent, est obligé de s'écouler dans ces passages uniquement sous l'effet dudit déplacement du moteur (E) dans l'atmosphère qui l'entoure.

8. Un moteur selon l'une quelconque des revendications 1 à 6, dans lequel l'air de refroidissement qui s'écoule à travers lesdits moyens de passage et les autres moyens de passage (30a) lorsqu'ils existent, est obligé de s'écouler dans lesdits passages partiellement sous l'effet du déplacement du moteur (E) dans l'atmosphère qui l'entoure et partiellement par des moyens générateurs d'écoulement d'air entraînés par une source de puissance motrice.

9. Un moteur selon l'une quelconque des revendications précédentes, dans lequel le rotor (13) est muni de moyens de réduction de l'amplitude du refroidissement nécessaire.

10. Un moteur selon la revendication 9, dans lequel lesdits moyens comprennent l'isolation thermique sur une face du rotor exposée à la combustion.

11. Un moteur selon l'une quelconque des revendications précédentes, dans lequel le moteur (E) est installé dans un véhicule.

## Ansprüche

1. Drehbare Brennnkraftmaschine (E), in der ein Drehkolben oder Rotor (13) sich innerhalb eines Hohlraumes (11) in einem Gehäuse (10) dreht, wobei der Rotor (13) und die Wände (21) des Gehäuses (11) so geformt sind, daß Arbeitskammern zwischen ihnen ausgebildet werden, deren Volumen sich ändert, wenn der Rotor (13) sich dreht, und wobei der Hohlraum (11) mit einem Einlaß (8) und einem Auslaß (9) versehen ist und wobei der Rotor eine Durchlaßeinrichtung (30) für Kühlluft von Luft aufweist, dadurch gekennzeichnet, daß Einrichtungen (40,41) vorgesehen sind, um Luft durch die Durchlaßeinrichtung (30) zum Kühlen des Rotors (13) als Ergebnis der Bewegung der Maschine (E) durch die umgebende Atmosphäre zu zwingen und um die Luft, die durch die Durchlaßeinrichtung geströmt ist, in die Atmosphäre auszupuffen, und daß Einrichtungen vorgesehen sind, um die Maschine (E) mit Luft zu versorgen, die in die Arbeitskammern aus der Atmosphäre eingeführt wird, ohne von der Durchlaßeinrichtung (30) in den Rotor (13) geleitet zu werden.

2. Maschine nach Anspruch 1, bei der eine Eingangsleiteinrichtung (40) vorgesehen ist, um Luft zu der Durchlaßeinrichtung (30) in dem Rotor (13) von einer Stelle maximalen Luftdruckkes, durch die Bewegung erzeugt, zu leiten.

3. Maschine nach Anspruch 1 oder Anspruch 2, bei der eine Ausgangsleiteinrichtung (41) vorgesehen ist, um die Luft, die durch die Durchlaßeinrichtung (30) geströmt ist, an einer Stelle minimalen Luftdruckes, durch die Bewegung erzeugt, in die Atmosphäre abzulassen.

4. Maschine nach einem der Ansprüche 1 bis 3, bei der eine Einrichtung (42) vorgesehen ist, die ein Schmiermittel in die Luft gibt, die durch die Durchlaßeinrichtung (30) strömt.

5. Maschine nach Anspruch 4, bei der die Ausgangsleiteinrichtung (41) mit einer Einrichtung zum Sammeln des Schmiermittels aus der Luft, die von der Durchlaßeinrichtung (30) entlassen wird, und zum Zurückführen des gesammelten Schmiermittels an die Maschine (E) zur Wiederbenutzung versehen ist.

6. Maschine nach einem der vorangehenden Ansprüche, bei der der Rotor (13) auf einem exentrischen Zapfen (15) einer Hauptwelle (16) angebracht ist und in dem Hohlraum (11) zu einer Planetendrehbewegung angetrieben wird, wobei der exentrische Zapfen (15) mit einer weiteren Durchlaßeinrichtung (30a) für den Durchlaß der Luft, die durch die Durchlaßeinrichtung (30) in dem Rotor (13) strömt, versehen ist, wobei der Hohlraum (11) mit Endplatten (12a, 12b) versehen ist, die axial beabstandete Endwände bilden, welche den Hohlraum (11) verschließen und zwischen denen sich der Rotor (13) dreht, wobei die Endplatten (12a, 12b) mit Öffnungen (31,32) versehen sind, mit denen die Durchlaßeinrichtung (30) in dem Rotor (13) intermittierend kommuniziert.

7. Maschine nach einem der vorangehenden Ansprüche, bei der Kühlluft, die durch die Durchlaßeinrichtung (30) und gegebenenfalls durch die weitere Durchlaßeinrichtung (30a) strömt, durch diese Einrichtungen allein als Ergebnis der Bewegung der Maschine (E) durch die umgebende Atmosphäre strömt.

8. Maschine nach einem der Ansprüche 1 bis 6, bei der die Kühlluft, die durch die Durchlaßeinrichtung (30) und gegebenenfalls durch die weitere Durchlaßeinrichtung (30a) strömt, durch die Einrichtungen teilweise als Ergebnis der Bewegung der Maschine (E) durch die umgebende Atmosphäre und teilweise durch eine Luftstromerzeugungseinrichtung, die von einer Energiequelle betrieben wird, strömt.

9. Maschine nach einem der vorangehenden Ansprüche, bei der der Rotor (13) mit einer Einrichtung zum Reduzieren des erforderlichen Kühlaufwandes versehen ist.

10. Maschine nach Anspruch 9, bei der die Einrichtung die thermische Isolierung einer Seite des Rotors umfaßt, die der Verbrennung ausgesetzt ist.

11. Maschine nach einem der vorangehenden Ansprüche, bei der die Maschine (E) in ein Kraftfahrzeug eingebaut ist.

FIG 1

EP 0 273 653 B1

FIG 3

FIG 2

8

FIG 4

FIG 5